# EUROPEAN PATENT APPLICATION

(11) **EP 4 811 639 A1**
(43) Date of publication of application: **23.09.2026**
(21) Application number: 24889933.8
(22) Date of filing: 11.03.2024
(51) Int. Cl.: H02M 3/335, H02M 1/088

(54) **CONTROL METHOD FOR BRIDGE RESONANT CONVERTER AND BRIDGE RESONANT CONVERTER**

(30) Priority: 16.11.2023 CN 202311523525
(71) Applicant: Hangzhou Whizpo System Technology Co., Ltd, Zhejiang 311215 (CN)
(72) Inventor: HUANG, Guisong, Hangzhou, Zhejiang 311215 (CN); LIU, Gang, Hangzhou, Zhejiang 311215 (CN)
(74) Representative: Michalski Hüttermann & Partner mbB
(86) International application number: PCT/CN2024/081041
(87) International publication number: WO 2025/102559

(57) **Abstract**

Provided in the present application are a control method for a bridge resonant converter and the bridge resonant converter. The control method includes: receiving an input voltage and an output voltage of the bridge resonant converter, and calculating a gain of the bridge resonant converter based on the input voltage and the output voltage; and determining whether the gain is greater than or equal to 1, and setting lengths of a first time Ta and a second time Tb differently when the gain is greater than or equal to 1 and when the gain is less than 1, where within the first time Ta, a voltage difference between both terminals of a transformer winding on a side where an output terminal of the bridge resonant converter is located is zero, and the second time Tb is a turn-off delay time of a switching transistor in a bridge unit on the side where the output terminal is located relative to a switching transistor that operates synchronously therewith in a bridge unit on a side where an input terminal is located. Based only on two sampling signals, namely the input voltage and the output voltage, which are necessary for controlling the bridge resonant converter, simple time control for zero voltage difference between the both terminals can be achieved without an additional sampling circuit.

## Description

### TECHNICAL FIELD

The present application relates to the field of power supplies, and particularly to a control method for a bridge resonant converter and the bridge resonant converter.

### BACKGROUND

The bridge resonant converter is a highly attractive isolated DC-DC converter. Due to its ability to achieve soft switching over the entire load range, it can reduce switching losses, improve converter efficiency, decrease size, and increase power density, thereby being widely used in various fields.

The bridge resonant converter typically adopts a variable-frequency control method, that is, controlling the operating frequency of its switching transistors. This is a challenge in applications with a wide input voltage range or a wide output voltage range. Because a wide input voltage range or a wide output voltage range implies that the switching frequency range of the bridge resonant converter also increases accordingly. If it is desired to increase the switching frequency range that the controller can provide and the switching frequency range that the switching transistors in the bridge resonant converter can withstand, higher-performance controllers or switching devices are required, which undoubtedly increases the cost of the bridge resonant converter. On the other hand, a wider switching frequency range causes the devices to operate at their limits, resulting in degraded device performance, such as greater interference with other devices, which leads to poor converter reliability. Additionally, it also increases device losses, thereby reducing converter efficiency.

With the development of technology and the diversified demands of market products, bridge resonant converters with a wide input voltage range or a wide output voltage range are needed and expected.

Therefore, providing a control method for a bridge resonant converter to achieve high efficiency and high reliability thereof has become a key focus of industry research.

### SUMMARY

The present application provides a control method for a bridge resonant converter, the bridge resonant converter including a first bridge unit, a transformer, a second bridge unit, and a resonant unit, where one terminal of the first bridge unit is connected to a first winding of the transformer, and the other terminal thereof is configured to receive or output a first voltage; one terminal of the second bridge unit is connected to a second winding of the transformer, and the other terminal thereof is configured to correspondingly output or receive a second voltage; the resonant unit is connected between the first bridge unit and the first winding or between the second bridge unit and the second winding; and the control method includes: S1: receiving an input voltage and an output voltage of the bridge resonant converter, and calculating a gain of the bridge resonant converter based on the input voltage and the output voltage; and S2: determining whether the gain is greater than or equal to 1, and setting lengths of a first time Ta and a second time Tb differently when the gain is greater than or equal to 1 and when the gain is less than 1, where within the first time Ta, a voltage difference between both terminals of a transformer winding on a side where an output terminal of the bridge resonant converter is located is zero, and the second time Tb is a turn-off delay time of a switching transistor in a bridge unit on the side where the output terminal is located relative to a switching transistor that operates synchronously therewith in a bridge unit on a side where an input terminal is located.

Further, in step S2, setting lengths of a first time Ta and a second time Tb differently when the gain is greater than or equal to 1 and when the gain is less than 1 includes: S21: determining whether the gain is greater than or equal to 1, if the gain is greater than or equal to 1, proceeding to step S22, and if the gain is not greater than or equal to 1, proceeding to step S23; S22: configuring time parameters A and B according to a first relational expression; S23: configuring the time parameters A and B according to a second relational expression; and S24: obtaining the first time Ta and the second time Tb according to the time parameters A and B.

Further, in the first relational expression, the time parameter A is related to the gain and the time parameter B, and the time parameter B is a constant; and in the second relational expression, the time parameter A is a constant, and the time parameter B is related to the gain.

Further, step S24 includes: receiving an on-time Ts of the switching transistor in the bridge unit on a side where an input terminal is located within a half switching period and the time parameters A and B, and respectively obtaining the first time Ta and the second time Tb according to the relational expressions Ta = A*Ts and Tb = B*Ts.

Further, the control method further includes: S31: receiving an output sampling signal from the bridge resonant converter and a reference signal corresponding to the output sampling signal, and calculating an error signal between the output sampling signal and the reference signal; and S32: obtaining the on-time Ts based on the error signal.

Further, the control method further includes step S4: outputting a switching drive signal for controlling the switching transistor in the bridge resonant converter, where at the first time Ta, the switching transistor in the bridge unit on the side where the output terminal of the bridge resonant converter is located operates such that the voltage difference between the both terminals of the transformer winding on the side where the output terminal is located is zero.

Further, each half switching period of the bridge resonant converter includes the first time.

The present application further provides a bridge resonant converter using the control method described above, including: the first voltage that is the input voltage; the second voltage that is the output voltage; the first bridge unit configured as a half-bridge topology, where both terminals of the first winding are respectively connected to common nodes of two legs in the half-bridge topology;
the second bridge unit configured as a full-bridge topology, where both terminals of the second winding are respectively connected to common nodes of two switching legs in the full-bridge topology; and a controller, configured to perform the control method described above.

Further, within the first time Ta, a switching control signal output by the controller controls two lower transistors or two upper transistors of the full-bridge topology to be turned on simultaneously.

The present application further provides a bidirectional bridge resonant converter using the control method described above, including: the first bridge unit configured as a full-bridge topology, where both terminals of the first winding are respectively connected to common nodes of two switching legs in the first bridge unit; the second bridge unit configured as a full-bridge topology, where both terminals of the second winding are respectively connected to common nodes of two switching legs in the second bridge unit, and the bidirectional bridge resonant converter is configured to convert the first voltage into the second voltage or convert the second voltage into the first voltage; and a controller, configured to perform the control method described above.

Further, when the bidirectional bridge resonant converter is configured to convert the first voltage into the second voltage, within the first time Ta, a switching control signal output by the controller controls two lower transistors or two upper transistors of the second bridge unit to be turned on simultaneously; and when the bidirectional bridge resonant converter is configured to convert the second voltage into the first voltage, within the first time Ta, the switching control signal output by the controller controls two lower transistors or two upper transistors of the first bridge unit to be turned on simultaneously.

The present application further provides a bridge resonant converter using the control method described above, including: the first voltage that is the input voltage; the second voltage that is the output voltage; the first bridge unit configured as a half-bridge topology, where both terminals of the first winding are respectively connected to common nodes of two legs in the half-bridge topology; the second bridge unit configured as a three-level half-bridge topology, where the three-level half-bridge topology includes: a switching leg comprising a first switching transistor, a second switching transistor, a third switching transistor, and a fourth switching transistor connected in series; a capacitor leg comprising a third capacitor and a fourth capacitor connected in series, where the capacitor leg is connected in parallel with the switching leg; and a flying capacitor, connected between a common node of the first switching transistor and the second switching transistor and a common node of the third switching transistor and the fourth switching transistor, where both terminals of the second winding are respectively connected to a common node of the second switching transistor and the third switching transistor and a common node of the capacitor leg; and a controller, configured to perform the control method described above.

Further, within the first time Ta, a switching control signal output by the controller controls the second switching transistor and the fourth switching transistor to be turned on simultaneously or the first switching transistor and the third switching transistor to be turned on simultaneously.

The present application further provides a bidirectional bridge resonant converter using the control method described above, including: the first bridge unit configured as a full-bridge topology, where both terminals of the first winding are respectively connected to common nodes of two switching legs in the full-bridge topology; the second bridge unit configured as a three-level half-bridge topology, where the three-level half-bridge topology includes: a switching leg comprising a first switching transistor, a second switching transistor, a third switching transistor, and a fourth switching transistor connected in series; a capacitor leg comprising a first capacitor and a second capacitor connected in series, where the capacitor leg is connected in parallel with the switching leg; and a flying capacitor, connected between a common node of the first switching transistor and the second switching transistor and a common node of the third switching transistor and the fourth switching transistor, where both terminals of the second winding are respectively connected to a common node of the second switching transistor and the third switching transistor and a common node of the capacitor leg; and a controller, configured to perform the control method described above.

Further, when the bidirectional bridge resonant converter is configured to convert the first voltage into the second voltage, within the first time Ta, a switching control signal output by the controller controls the second switching transistor and the fourth switching transistor to be turned on simultaneously or the first switching transistor and the third switching transistor to be turned on simultaneously; and when the bidirectional bridge resonant converter is configured to convert the second voltage into the first voltage, within the first time Ta, the switching control signal output by the controller controls two lower transistors or two upper transistors of the first bridge unit to be turned on simultaneously.

The features and technical advantages of the present disclosure have been outlined rather broadly, such that the detailed description below can be better understood. Additional features and advantages of the present disclosure will be described hereinafter, which form the subject matter of the claims of the present disclosure. It should be understood by those skilled in the art that the disclosed concepts and specific embodiments may be readily used as a basis for modifying or designing other structures or processes for achieving the same purposes of the present disclosure. It should also be recognized by those skilled in the art that such equivalent structures do not depart from the spirit and scope of the present disclosure as set forth in the appended claims.

### BRIEF DESCRIPTION OF THE DRAWINGS

For a more complete understanding of the present disclosure and its advantages, reference is now made to the following description in conjunction with the accompanying drawings, in which:
FIG. 1 shows a schematic block diagram of a bridge resonant converter according to an embodiment of the present application;
FIG. 2 shows a control flowchart of a bridge resonant converter according to an embodiment of the present application;
FIG. 3 shows a schematic diagram of operating waveforms of an output current io and a resonant current ir of the bridge resonant converter in FIG. 1 according to an embodiment of the present application;
FIG. 4 shows a control flowchart of a bridge resonant converter according to an embodiment of the present application;
FIG. 5 shows a schematic circuit diagram of a bidirectional bridge resonant converter according to an embodiment of the present application;
FIG. 6 shows a schematic diagram of an operating waveform of the bidirectional bridge resonant converter in FIG. 5 according to an embodiment of the present application;
FIG. 7 shows a schematic circuit diagram of a bridge resonant converter according to an embodiment of the present application;
FIG. 8 shows a schematic circuit diagram of a bridge resonant converter according to an embodiment of the present application; and
FIG. 9 shows a schematic circuit diagram of a bidirectional bridge resonant converter according to an embodiment of the present application.

Unless otherwise specified, corresponding reference numerals in different drawings generally refer to corresponding parts. These drawings are provided to clearly illustrate related aspects of various embodiments and are not necessarily drawn to scale.

### DETAILED DESCRIPTION OF THE EMBODIMENTS

The technical solutions in the present application will be described clearly and completely with reference to the accompanying drawings. Apparently, the described embodiments are some rather than all of the embodiments of the present application. All other embodiments obtained by those of ordinary skill in the art based on the embodiments in the present application without creative efforts shall fall within the scope of protection of the present application.

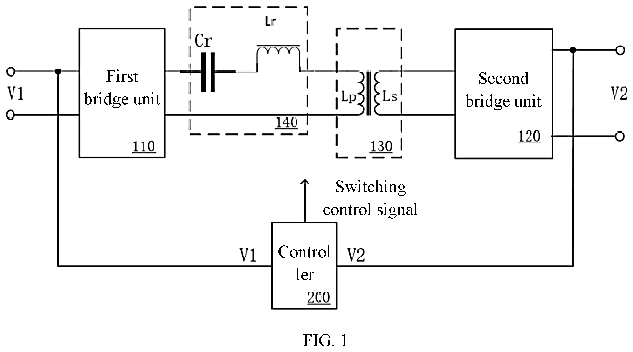

Referring to the schematic block diagram of a bridge resonant converter according to an embodiment of the present application as shown in FIG. 1, the bridge resonant converter includes: a first bridge unit 110, a transformer 130, a second bridge unit 120, and a resonant unit 140, where one terminal of the first bridge unit 110 is connected to a first winding Lp of the transformer 130, and the other terminal thereof is configured to receive or output a first voltage V1; one terminal of the second bridge unit 120 is connected to a second winding Ls of the transformer 130, and the other terminal thereof is configured to correspondingly output or receive a second voltage V2; and the resonant unit 140 is connected between the first bridge unit 110 and the first winding Lp or between the second bridge unit 120 and the second winding Ls.

As shown in FIG. 1, the resonant unit 140 is configured as an LC series resonant unit including a resonant inductor Lr and a resonant capacitor Cr connected in series. As shown in FIG. 1, the LC series resonant unit is connected between the first bridge unit 110 and the first winding Lp. In practical applications, the LC series resonant unit may also be connected between the second bridge unit 120 and the second winding Ls. Certainly, the resonant unit 140 may also be configured as other structures, such as an LLC resonant unit, the resonant capacitor Cr is shared with the capacitor in the leg of the bridge unit, as long as a resonant cavity is formed between the first bridge unit 110 and the first winding Lp or between the second bridge unit 120 and the second winding Ls.

For the bridge resonant converter shown in FIG. 1, variable-frequency control is typically adopted. It is known that for variable-frequency control, the switching frequency of switching transistors is controlled by a sampling-based feedback loop. At the corresponding switching frequency, each switching transistor operates at a duty cycle slightly less than 50%, and the upper transistor and the lower transistor of the same leg operate alternately with a dead time therebetween. At least one switching transistor in the second bridge unit 120 and at least one switching transistor in the first bridge unit 110 form synchronously operating switching transistors.

For the bridge resonant converter shown in FIG. 1, when it is configured as a unidirectional bridge resonant converter to convert the first voltage V1 into the second voltage V2, the first bridge unit 110 is referred to as a bridge unit on a side where an input terminal is located, the first winding Lp is referred to as a transformer winding on the side where the input terminal is located, and the first voltage V1 may be referred to as an input voltage; and the second bridge unit 120 is referred to as a bridge unit on a side where an output terminal is located, the second winding Ls is referred to as a transformer winding on the side where the output terminal is located, and the second voltage V2 may be referred to as an output voltage.

For the bridge resonant converter shown in FIG. 1, when it is configured as a bidirectional bridge resonant converter, it can be configured to convert the first voltage V1 into the second voltage V2 or convert the second voltage V2 into the first voltage V1. When it operates to convert the first voltage V1 into the second voltage V2, similarly, the first bridge unit 110 is referred to as the bridge unit on the side where the input terminal is located, the first winding Lp is referred to as the transformer winding on the side where the input terminal is located, and the first voltage V1 may be referred to as the input voltage; and the second bridge unit 120 is referred to as the bridge unit on the side where the output terminal is located, the second winding Ls is referred to as the transformer winding on the side where the output terminal is located, and the second voltage V2 may be referred to as the output voltage. When it operates to convert the second voltage V2 into the first voltage V1, the second bridge unit 120 is referred to as the bridge unit on the side where the input terminal is located, the second winding Ls is referred to as the transformer winding on the side where the input terminal is located, and the second voltage V2 may be referred to as the input voltage; and the first bridge unit 110 is referred to as the bridge unit on the side where the output terminal is located, the first winding Lp is referred to as the transformer winding on the side where the output terminal is located, and the first voltage V1 may be referred to as the output voltage.

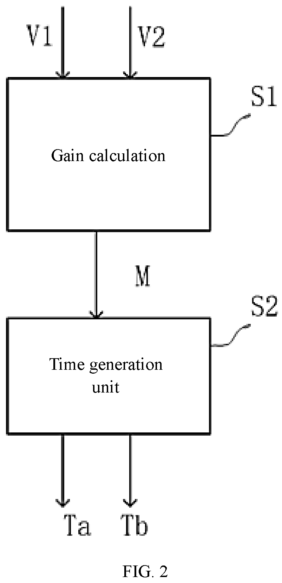

Further, as shown in FIG. 1, the bridge resonant converter further includes a controller 200 for controlling the bridge resonant converter. The controller 200 performs the following control method. For details, reference can be made to FIG. 2, which shows a control flowchart of a bridge resonant converter. The controller 200 performs the following steps: S1: receiving an input voltage and an output voltage of the bridge resonant converter, and calculating a gain M of the bridge resonant converter based on the input voltage and the output voltage; and
S2: determining whether the gain M is greater than or equal to 1, and setting lengths of a first time Ta and a second time Tb differently when the gain M is greater than or equal to 1 and when the gain is less than 1, where within the first time Ta, a voltage difference between both terminals of a transformer winding on a side where an output terminal of the bridge resonant converter is located is zero, and the second time Tb is a turn-off delay time of a switching transistor in a bridge unit on the side where the output terminal is located relative to a switching transistor that operates synchronously therewith in a bridge unit on a side where an input terminal is located.

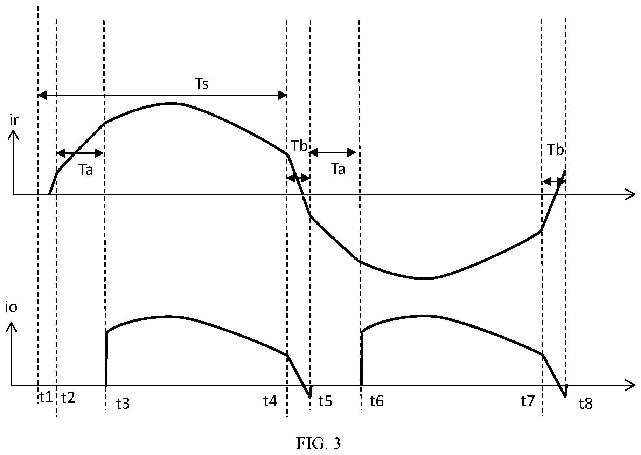

Reference can be made to FIG. 3, which shows a schematic diagram of operating waveforms of an output current io and a resonant current ir of the bridge resonant converter in FIG. 1. As shown in FIG. 3, during the first time Ta, if the voltage difference between the both terminals of the transformer winding on the side where the output terminal of the bridge resonant converter is located is zero, the output current io of the bridge resonant converter is zero. During this period, the resonant current ir in the resonant unit 140 gradually increases at a high rate, as shown in FIG. 3, and energy is stored in a resonant circuit. After the first time Ta, the energy in the resonant circuit can be released, thereby forming a BOOST stage. In this way, voltage regulation within a certain range can be achieved and the range of the switching frequency can be reduced. Particularly for a bridge resonant converter with a wide input voltage range or a wide output voltage range, when the input voltage is relatively low, the resonant current ir can also be increased, such that a gain of the resonant unit is greater than 1, thereby achieving the BOOST stage and reducing the range of the switching frequency.

Moreover, as described above, according to the present application, the bridge resonant converter is controlled based only on the gain M between the output voltage and the input voltage, such that the time when the voltage difference between the both terminals of the transformer winding on the side where the output terminal thereof is located is zero. The output voltage Vo and the input voltage Vin are sampling signals necessary for controlling the bridge resonant converter. That is, according to the present application, without an additional sampling circuit, the control of the bridge resonant converter can be achieved merely by the existing controller in the bridge resonant converter based on the existing sampling signals, namely the output voltage and the input voltage.

Further, no additional sampling is required, thereby avoiding adverse effects on control caused by sampling delay and sampling errors, enabling more precise control, and improving the reliability of the bridge resonant converter.

In addition, to improve the efficiency of the bridge resonant converter, it is desirable to achieve zero-current switching (ZCS) for the switching transistor in the second bridge unit 120 of the bridge resonant converter. According to the present application, the switching transistor in the bridge unit on the side where the output terminal is located is controlled to be turned off with a delay of the second time Tb relative to the switching transistor that operates synchronously therewith in the bridge unit on the side where the input terminal is located. As shown in FIG. 3, within the second time Tb, the output current can cross zero and reverse direction. After that, the switching transistor in the bridge unit on the side where the output terminal is located is turned off, such that ZCS can be achieved for the switching transistor in the bridge unit on the side where the output terminal is located, thereby improving the efficiency of the bridge resonant converter.

To enable the bridge resonant converter to have the boost stage of the first time Ta described above, and to enable the switching transistor in the bridge unit on the side where the output terminal of the bridge resonant converter is located to achieve ZCS, namely to have the second time Tb described above, ideal operating waveforms of the bridge resonant converter are shown in FIG. 3. Based on the operating waveforms of the bridge resonant converter shown in FIG. 3, it has been found through research that the first time Ta and the second time Tb are related to a gain of the bridge resonant converter. Specifically, when the gain of the bridge resonant converter is greater than or equal to 1 and when the gain of the bridge resonant converter is less than 1, the lengths of the first time Ta and the second time Tb should be set differently. That is, it is necessary to set the lengths of the first time Ta and the second time Tb differently when the gain is greater than or equal to 1 and when the gain is less than 1.

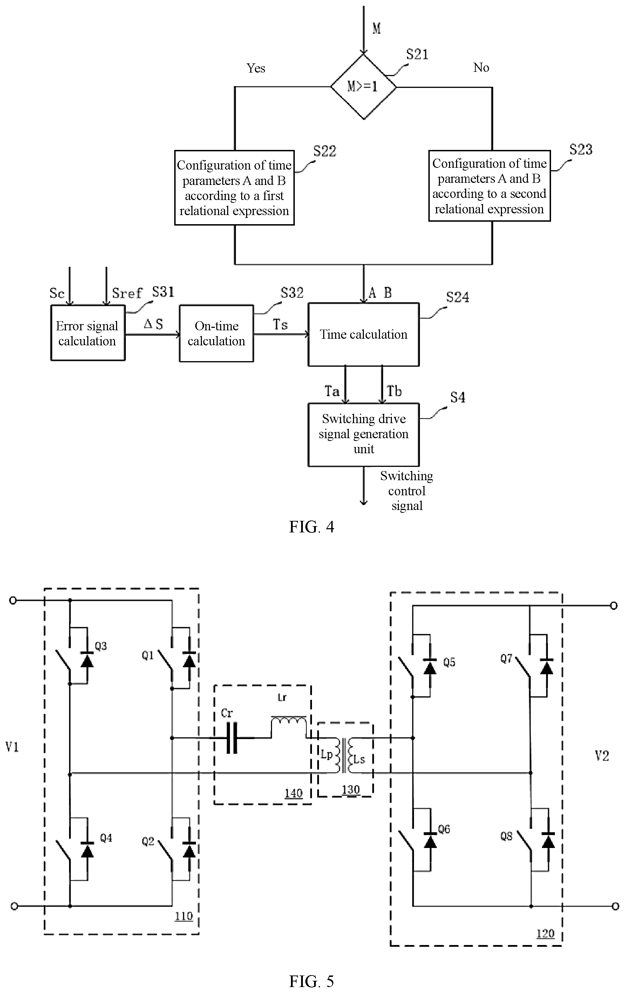

More specifically, reference is made to FIG. 4, which shows a control flowchart of a bridge resonant converter. As shown in FIG. 4, in step S2, setting lengths of a first time Ta and a second time Tb differently when the gain is greater than or equal to 1 and when the gain is less than 1 more specifically includes: S21: determining whether the gain is greater than or equal to 1, if the gain is greater than or equal to 1, proceeding to step S22, and if the gain is not greater than or equal to 1, proceeding to step S23; S22: configuring time parameters A and B according to a first relational expression; S23: configuring the time parameters A and B according to a second relational expression; and S24: obtaining the first time Ta and the second time Tb according to the time parameters A and B. That is, when the gain is greater than or equal to 1 and when the gain is less than 1, the time parameters A and B are set differently, and thus the first time Ta and the second time Tb are also set differently.

Specifically, in an embodiment, in the first relational expression, B = b1 + k1. Herein, b1 is a constant generally having a value between 0.01 and 0.05. Certainly, the present application does not limit the specific value of b1, which is related to the specific circuit of the bridge resonant converter. Herein, k1 is a correction term for correcting the value of B, which may be adjusted according to parameters of components in the bridge resonant converter, or may be corrected by multiple experiments after the design of the bridge resonant converter is completed, to obtain a correction term k1 suitable for the bridge resonant converter. That is, in the first relational expression, the time parameter B is a constant.

Specifically, in an embodiment, in the first relational expression, A = (M - 1)/M + 2*B + k2, where k2 is a correction term for correcting the value of A, which may be adjusted according to the parameters of the components in the bridge resonant converter, or may be corrected by multiple experiments after the design of the bridge resonant converter is completed, to obtain a correction term k2 suitable for the bridge resonant converter. That is, in the first relational expression, the time parameter A is related to the gain M of the bridge resonant converter and the time parameter B.

Specifically, in an embodiment, in the second relational expression, B = (1 - M)/2 + k3, where k3 is also a correction term for correcting the value of B, which may be adjusted according to the parameters of the components in the bridge resonant converter, or may be corrected by multiple experiments after the design of the bridge resonant converter is completed, to obtain a correction term k3 suitable for the bridge resonant converter. That is, in the second relationship, the time parameter B is related to the gain M of the bridge resonant converter.

Specifically, in an embodiment, in the second relationship, A = b2 + k4. Herein, b2 is a constant generally close to zero. Certainly, the present application does not limit the specific value of b2, which is related to the specific circuit of the bridge resonant converter. Herein, k4 is a correction term for correcting the value of A, which may be adjusted according to the parameters of the components in the bridge resonant converter, or may be corrected by multiple experiments after the design of the bridge resonant converter is completed, to obtain a correction term k4 suitable for the bridge resonant converter. That is, in the second relationship, the time parameter A is a constant.

More specifically, as shown in FIG. 4, step S24 further includes: receiving an on-time Ts of the switching transistor in the bridge unit on a side where an input terminal is located within a half switching period. More specifically, in an embodiment, step S24 includes: receiving the on-time Ts of the switching transistor in the bridge unit on a side where an input terminal is located within the half switching period and the time parameters A and B, and respectively obtaining the first time Ta and the second time Tb according to the relational expressions Ta = A*Ts and Tb = B*Ts.

More specifically, as shown in FIG. 4, the controller 200 further performs the following steps: S31: receiving an output sampling signal Sc from the bridge resonant converter and a reference signal Sref corresponding to the output sampling signal Sc, and calculating an error signal ΔS between the output sampling signal Sc and the reference signal Sref; and S32: obtaining the on-time Ts based on the error signal ΔS. During specific implementation, step S31 is performed by an error calculation unit, and step S32 is performed by a proportional-integral-derivative (PID) operation unit.

More specifically, the output sampling signal Sc herein may be any signal indicative of a signal on the side where the output terminal of the bridge resonant converter is located, such as an output voltage signal, an output current signal, or an output power signal, and the corresponding reference signal Sref may be a voltage reference signal, a current reference signal, or a power reference signal. As long as the on-time Ts can be obtained based on the sampling signal Sc and the reference signal Sref, it is acceptable.

Further, the controller 200 further performs step S4: outputting a switching drive signal for controlling the switching transistor in the bridge resonant converter, where at the first time Ta, the switching transistor in the bridge unit on the side where the output terminal of the bridge resonant converter is located operates such that the voltage difference between the both terminals of the transformer winding on the side where the output terminal is located is zero.

Further, as shown in FIG. 3, each half switching period of the bridge resonant converter includes the first time Ta.

The specific operating mode of the bidirectional bridge resonant converter shown in FIG. 5 is described below. Reference is made to FIG. 5, which shows a schematic circuit diagram of a bidirectional bridge resonant converter using the above-mentioned control method of the present application.

As shown in FIG. 5, both the first bridge unit 110 and the second bridge unit 120 are configured as full-bridge topologies. The first bridge unit 110 includes a first switching leg including a first switching transistor Q1 and a second switching transistor Q2 connected in series, and a second switching leg including a third switching transistor Q3 and a fourth switching transistor Q4 connected in series. The first switching leg and the second switching leg are connected in parallel. Both terminals of the first winding Lp are respectively connected to common nodes of the first switching leg and the second switching leg via the resonant unit 140, that is, the both terminals of the first winding Lp are respectively connected to the common nodes of the two switching legs in the first bridge unit 110. The second bridge unit 120 includes a third switching leg including a fifth switching transistor Q5 and a sixth switching transistor Q6 connected in series, and a fourth switching leg including a seventh switching transistor Q7 and an eighth switching transistor Q8 connected in series. The third switching leg and the fourth switching leg are connected in parallel. Both terminals of the second winding Ls are respectively connected to common nodes of the third switching leg and the fourth switching leg, that is, the both terminals of the second winding Ls are respectively connected to the common nodes of the two switching legs in the second bridge unit 120.

For the bidirectional bridge resonant converter shown in FIG. 5, since both the first bridge unit 110 and the second bridge unit 120 are configured as the full-bridge topologies, it can be configured to convert the first voltage V1 into the second voltage V2 or convert the second voltage V2 into the first voltage V1, thereby achieving the function of the bidirectional converter.

During specific implementation, when the bidirectional bridge resonant converter is configured to convert the first voltage V1 into the second voltage V2, within the first time Ta, a switching control signal output by the controller 200 according to the control method described above controls two lower transistors (the sixth switching transistor Q6 and the eighth switching transistor Q8) or two upper transistors (the fifth switching transistor Q5 and the seventh switching transistor Q7) of the second bridge unit 120 (the bridge unit on the side where the output terminal is located) to be turned on simultaneously. Thus, the both terminals of the transformer winding Ls on the side where the output terminal is located are short-circuited, and the voltage difference between the both terminals is zero.

When the bidirectional bridge resonant converter is configured to convert the second voltage V2 into the first voltage V1, within the first time Ta, the switching control signal output by the controller 200 according to the control method described above controls two lower transistors (the second switching transistor Q2 and the fourth switching transistor Q4) or two upper transistors (the first switching transistor Q1 and the third switching transistor Q3) of the first bridge unit 110 to be turned on simultaneously. Thus, the both terminals of the transformer winding Lp on the side where the output terminal is located are short-circuited, and the voltage difference between the both terminals is zero.

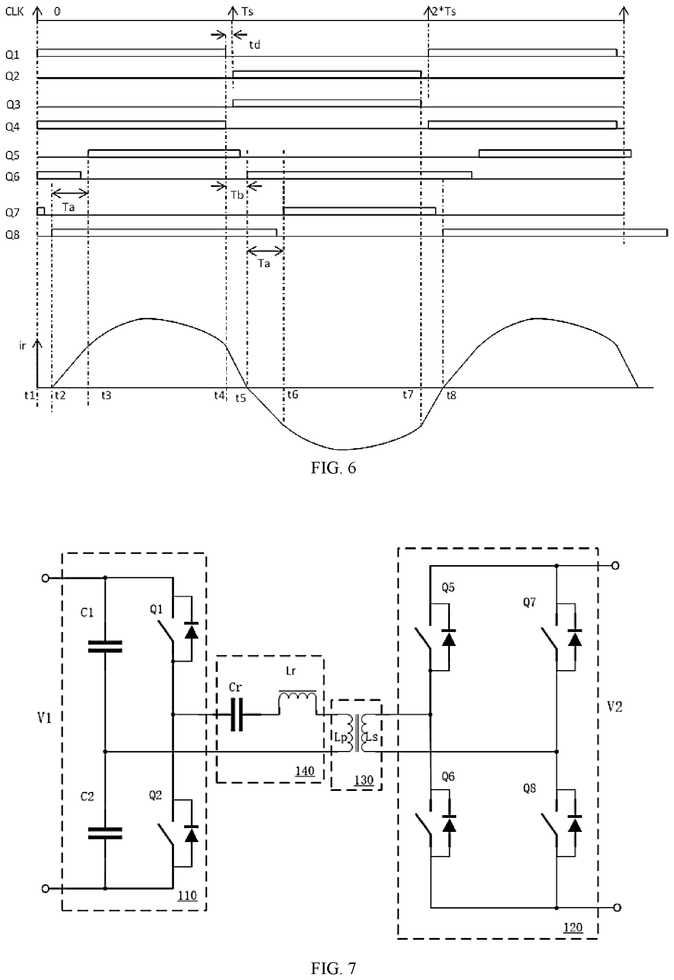

More specifically, in actual operation, the bidirectional bridge resonant converter can also operate in other modes. For details, reference can be made to FIG. 6, which shows a schematic diagram of an operating waveform of the bidirectional bridge resonant converter in FIG. 5, and also to FIG. 3. It should be noted that the controller 200 outputs switching drive signals for controlling the first switching transistor Q1 to the eighth switching transistor Q8 according to the control method described above. It is known that for variable-frequency control, the switching frequency of switching transistors is controlled by a sampling-based feedback loop. At the corresponding switching frequency, each switching transistor operates at a duty cycle slightly less than 50%.

For the full-bridge resonant converter shown in FIG. 5, the upper and lower transistors of the same leg in the same bridge unit operate in a complementary manner with a dead time therebetween, and the opposite transistors of the two legs in the same bridge unit operate synchronously, while a pair of opposite transistors in the two bridge units operates synchronously. As shown in FIG. 6, the first switching transistor Q1 and the fourth switching transistor Q4 in the first bridge unit 110 operate synchronously, and at the same time, they operate synchronously with the fifth switching transistor Q5 and the eighth switching transistor Q8 in the second bridge unit 120. The third switching transistor Q3 and the second switching transistor Q2 in the first bridge unit 110 operate synchronously, and at the same time, they operate synchronously with the seventh switching transistor Q7 and the sixth switching transistor Q6 in the second bridge unit 120. The third switching transistor Q3 and the fourth switching transistor Q4 in the first bridge unit 110 operate in a complementary manner with a dead time therebetween, and the first switching transistor Q1 and the second switching transistor Q2 operate in a complementary manner with a dead time therebetween. The fifth switching transistor Q5 and the sixth switching transistor Q6 in the second bridge unit 120 operate in a complementary manner with a dead time therebetween, and the seventh switching transistor Q7 and the eighth switching transistor Q8 operate in a complementary manner with a dead time therebetween.

For the full-bridge resonant converter shown in FIG. 5, according to the control method of the present application, during the period in which the opposite transistors in the bridge unit on the side where the input terminal is located are turned on, before the switching transistors that operate synchronously therewith in the bridge unit on the side where the output terminal is located are turned on simultaneously, the time during which the two lower transistors or the two upper transistor in the bridge unit on the side where the output terminal is located are turned on simultaneously is increased. For the full-bridge resonant converter shown in FIG. 5, when the second bridge unit 120 is on the side where the output terminal is located, the time during which the sixth switching transistor Q6 and the eighth switching transistor Q8 are turned on simultaneously or the fifth switching transistor Q5 and the seventh switching transistor Q7 are turned on simultaneously is increased. When the first bridge unit 110 is on the side where the output terminal is located, the time during which the second switching transistor Q2 and the fourth switching transistor Q4 are turned on simultaneously or the third switching transistor Q3 and the first switching transistor Q1 are turned on simultaneously is increased.

Specifically, referring to FIG. 6, within the half switching period from a time point t1 to a time point t4, the first switching transistor Q1 and the fourth switching transistor Q4 (a pair of opposite transistors) in the first bridge unit 110 on the side where the input terminal is located are turned on; within the period from the time point t1 to a time point t3, the sixth switching transistor Q6 is controlled to be turned on (that is, the on-time of the sixth switching transistor Q6 is extended to the time point t3); and at a time point t2, the eighth switching transistor Q8 is controlled to be turned on, such that within the period from the time point t2 to the time point t3, the sixth switching transistor Q6 and the eighth switching transistor Q8 (the two lower transistors in the second bridge unit 120) are turned on simultaneously. Thus, the both terminals of the second winding Ls are short-circuited, and the voltage difference between the both terminals is zero. In this case, the output current io of the bridge resonant converter is zero. During this period, the resonant current ir in the resonant unit 140 gradually increases at a high rate, as shown in FIG. 6, and energy is stored in the resonant circuit. After the first time Ta, the energy in the resonant circuit can be released, thereby forming the BOOST stage. In this way, voltage regulation within a certain range can be achieved and the range of the switching frequency can be reduced. Further, at the time point t3, the sixth switching transistor Q6 is controlled to be turned off, the fifth switching transistor Q5 is controlled to be turned on until the end of the half switching period at the time point t4, and the eighth switching transistor Q8 is also turned on until the end of the half switching period at the time point t4, such that the fifth switching transistor Q5 and the eighth switching transistor Q8 (a pair of opposite transistors) in the second bridge unit 120 and the first switching transistor Q1 and the fourth switching transistor Q4 (a pair of opposite transistors) in the first bridge unit 110 form synchronously operating switching transistors. During the period in which the opposite transistors (the first switching transistor Q1 and the fourth switching transistor Q4) in the bridge unit (the first bridge unit 110) on the side where the input terminal is located are turned on, before the switching transistors (the fifth switching transistor Q5 and the eighth switching transistor Q8) that operate synchronously therewith in the bridge unit (the second bridge unit 120) on the side where the output terminal is located are turned on simultaneously, the time during which the two lower transistors (the sixth switching transistor Q6 and the eighth switching transistor Q8) in the bridge unit (the second bridge unit 120) on the side where the output terminal is located are turned on simultaneously is added.

Further, as shown in FIG. 6, at the time point t4, the first switching transistor Q1 and the fourth switching transistor Q4 in the first bridge unit 110 are controlled to be turned off, while the fifth switching transistor Q5 and the eighth switching transistor Q8 in the second bridge unit 120 that operate synchronously therewith remain in the on state until a time point t5, where the time point t5 is later than the time point t4 by the length of the second time Tb. Accordingly, within the period from the time point t4 to the time point t5, the synchronously operating fifth switching transistor Q5 and eighth switching transistor Q8 are turned off with a delay of the second time Tb relative to the first switching transistor Q1 and the fourth switching transistor Q4, such that within the second time Tb, the output current crosses zero and reverses direction. After that, the switching transistor in the bridge unit on the side where the output terminal is located is turned off, such that ZCS can be achieved for the switching transistor in the bridge unit on the side where the output terminal is located, thereby improving the efficiency of the bridge resonant converter. Thus, a first half switching period is formed.

Within a second half switching period, the second switching transistor Q2 and the third switching transistor Q3 in the first bridge unit 110 operate synchronously with the sixth switching transistor Q6 and the seventh switching transistor Q7 in the second bridge unit 120. The eighth switching transistor Q8 is turned on with a delay to form the first time Ta in the second half period together with the subsequently turned-on sixth switching transistor Q6. The synchronously operating sixth switching transistor Q6 and seventh switching transistor Q7 are turned off with a delay of the second time Tb relative to the second switching transistor Q2 and the third switching transistor Q3, such that ZCS can be achieved for the switching transistor in the bridge unit on the side where the output terminal is located, thereby improving the efficiency of the bridge resonant converter. Thus, the first half switching period is formed. Its operating time sequence is similar to that in the first half period and will not be repeated herein.

Specifically, a dead time may be included between the turn-on and turn-off actions of the switching transistors that operate in a complementary manner in the first bridge unit 110, and a dead time may be included between the turn-on and turn-off actions of the switching transistors that operate in a complementary manner in the second bridge unit 120, to ensure reliable operation of the bridge resonant converter. It should be noted that the dead time is ignored in the above description.

FIG. 6 shows that two lower transistors are turned on simultaneously such that the voltage difference between the both terminals of the transformer winding on the side where the output terminal is located is zero. In practical applications, two upper transistors may also operate simultaneously such that the voltage difference between the both terminals of the transformer winding on the side where the output terminal is located is zero. Similarly, taking FIG. 6 as an example, within the first half switching period, the seventh switching transistor Q7 may be controlled to extend its conduction to the time point t3, so as to form the first time Ta in the second half period together with the subsequently turned-on fifth switching transistor Q5. Thus, the first half switching period is formed.

In the second half switching period, the fifth switching transistor Q5 is turned on with a delay to form the first time Ta in the second half switching period together with the subsequently turned-on seventh switching transistor Q7. Thus, the first half switching period is formed.

The above takes the bidirectional bridge resonant converter operating to convert the first voltage V1 into the second voltage V2 as an example to explain its principle.

In actual operation, when the bidirectional bridge resonant converter operates to convert the second voltage V2 into the first voltage V1, its control principle is the same as that described above, and will not be repeated herein. Accordingly, the first bridge unit 110 serves as an output side, and the second bridge unit 120 serves as an input side.

The present application further provides a bridge resonant converter. Reference is made to FIG. 7, which shows a schematic circuit diagram of a bridge resonant converter using the control method of the present application. The first bridge unit 110 is configured as a half-bridge topology. The primary bridge unit 110 includes a first switching leg including a first switching transistor Q1 and a second switching transistor Q2 connected in series, and a first capacitor leg including a first capacitor C1 and a second capacitor C2 connected in series. The first switching leg and the first capacitor leg are connected in parallel to receive the first voltage V1. Both terminals of the primary winding Lp are respectively connected to a common node of the first switching transistor Q1 and the second switching transistor Q2 in the first switching leg, and a common node of the first capacitor C1 and the second capacitor C2 in the first capacitor leg.

As in FIG. 5, the second bridge unit 120 is configured as a full-bridge topology. The second bridge unit 120 includes a third switching leg including a fifth switching transistor Q5 and a sixth switching transistor Q6 connected in series, and a fourth switching leg including a seventh switching transistor Q7 and an eighth switching transistor Q8 connected in series. The third switching leg and the fourth switching leg are connected in parallel to output the second voltage V2. Both terminals of the second winding Ls are respectively connected to common nodes of the third switching leg and the fourth switching leg, that is, the both terminals of the second winding Ls are respectively connected to the common nodes of the two switching legs in the second bridge unit 120.

The bridge resonant converter shown in FIG. 7 is configured to convert the first voltage V1 into the second voltage V2. Accordingly, the first bridge unit 110 is the bridge unit on the side where the input terminal is located, and the second bridge unit 120 is the bridge unit on the side where the output terminal is located. The first switching transistor Q1 in the first bridge unit 110 operates synchronously with the fifth switching transistor Q5 and the eighth switching transistor Q8 in the second bridge unit 120. The second switching transistor Q2 in the first bridge unit 110 operates synchronously with the seventh switching transistor Q7 and the sixth switching transistor Q6 in the second bridge unit 120. The first switching transistor Q1 and the second switching transistor Q2 in the first bridge unit 110 operate in a complementary manner with a dead time therebetween. The fifth switching transistor Q5 and the sixth switching transistor Q6 in the second bridge unit 120 operate in a complementary manner with a dead time therebetween, and the seventh switching transistor Q7 and the eighth switching transistor Q8 operate in a complementary manner with a dead time therebetween.

As in FIG. 5, the time during which the sixth switching transistor Q6 and the eighth switching transistor Q8 are turned on simultaneously or the fifth switching transistor Q5 and the seventh switching transistor Q7 are turned on simultaneously is added using the same time sequence, and the synchronously operating switching transistors in the second bridge unit 120 are turned off with a delay of the second time Tb relative to the switching transistors in the first bridge unit 110, thereby achieving the same function as in FIG. 5 when converting the first voltage V1 into the second voltage V2.

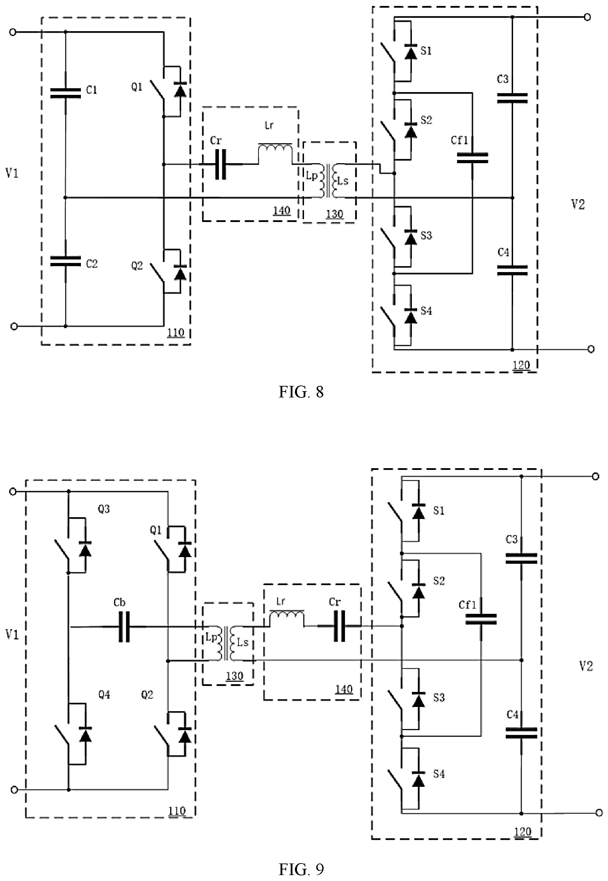

The present application further provides a bridge resonant converter. Reference is made to FIG. 8, which shows a schematic circuit diagram of a bridge resonant converter using the control method of the present application. Similar to FIG. 7, the first bridge unit 110 is configured as a half-bridge topology.

The second bridge unit 120 is configured in a three-level half-bridge topology, including: a switching leg including a first switching transistor S1, a second switching transistor S2, a third switching transistor S3, and a fourth switching transistor S4 connected in series; a capacitor leg including a third capacitor C3 and a fourth capacitor C4 connected in series, where the capacitor leg is connected in parallel with the switching leg; and a flying capacitor Cf1, connected between a common node of the first switching transistor S1 and the second switching transistor S2 and a common node of the third switching transistor S3 and the fourth switching transistor S4, where both terminals of the secondary winding Ls are respectively connected to a common node of the second switching transistor S2 and the third switching transistor S3 and a common node of the capacitor leg.

The bridge resonant converter shown in FIG. 8 is configured to convert the first voltage V1 into the second voltage V2. Accordingly, the first bridge unit 110 is the bridge unit on the side where the input terminal is located, and the second bridge unit 120 is the bridge unit on the side where the output terminal is located.

The first switching transistor Q1 in the first bridge unit 110 operates synchronously with the first switching transistor S1 and the second switching transistor S2 in the second bridge unit 120. The second switching transistor Q2 in the first bridge unit 110 operates synchronously with the third switching transistor S3 and the fourth switching transistor S4 in the second bridge unit 120.

The first time Ta, namely the time during which the second switching transistor S2 and the fourth switching transistor S4 are turned on simultaneously or the first switching transistor S1 and the third switching transistor S3 are turned on simultaneously is added, and the synchronously operating switching transistors in the second bridge unit 120 are turned off with a delay of the second time Tb relative to the switching transistors in the first bridge unit 110, thereby achieving the same function as in FIG. 5 when converting the first voltage V1 into the second voltage V2.

The present application further provides a bidirectional bridge resonant converter. Reference is made to FIG. 9, which shows a schematic circuit diagram of a bridge resonant converter using the control method of the present application. Similar to FIG. 5, the first bridge unit 110 is configured as a full-bridge topology. Similar to FIG. 8, the second bridge unit 120 is configured as a three-level half-bridge topology. Accordingly, the bidirectional bridge resonant converter can be configured to convert the first voltage V1 into the second voltage V2 or convert the second voltage V2 into the first voltage V1, thereby achieving the function of the bidirectional converter.

When the bidirectional bridge resonant converter is configured to convert the first voltage into the second voltage, the first switching transistor S1 and the second switching transistor S2 in the second bridge unit 120 operate synchronously with the second switching transistor Q2 and the third switching transistor Q3 in the first bridge unit 110. The third switching transistor S3 and the fourth switching transistor S4 in the second bridge unit 120 operate synchronously with the first switching transistor Q1 and the fourth switching transistor Q4 in the first bridge unit 110.

The first time Ta, namely the time during which the second switching transistor S2 and the fourth switching transistor S4 are turned on simultaneously or the first switching transistor S1 and the third switching transistor S3 are turned on simultaneously is added, and the synchronously operating switching transistors in the second bridge unit 120 are turned off with a delay of the second time Tb relative to the switching transistors in the first bridge unit 110.

When the bidirectional bridge resonant converter is configured to convert the second voltage into the first voltage, the first time Ta, namely the time during which the second switching transistor Q2 and the fourth switching transistor Q4 are turned on simultaneously or the first switching transistor Q1 and the third switching transistor Q3 are turned on simultaneously is added, and the synchronously operating switching transistors in the second bridge unit 120 are turned off with a delay of the second time Tb relative to the switching transistors in the first bridge unit 110.

The controller 200 described above is a digital controller, such as a digital signal processor (DSP) or a microcontroller unit (MCU). The control method described above is performed by programming of the controller 200, and no additional detection circuit is required in the present application. Therefore, the solution of the present application requires no change to the hardware circuit, resulting in low cost and simple operation.

In practical applications, when the bridge unit is a full-bridge topology, a capacitor Cb can also be added between the transformer and the full-bridge topology, as shown in FIG. 9, to avoid the problem of transformer saturation caused by magnetic bias due to circuit parameter errors when the bridge unit of the full-bridge topology operates as an excitation source.

Further, according to the above description, the bridge resonant converter of the present application determines the time when the voltage difference between the both terminals of the transformer winding is zero based on the real-time sampled input voltage, output voltage, and output sampling signal, thereby achieving good control timeliness and improving the performance of the bridge resonant converter.

Although the embodiments of the present disclosure and their advantages have been described in detail, it should be understood that various changes, substitutions, and alterations can be made herein without departing from the spirit and scope of the present disclosure as defined by the appended claims.

In addition, the processes, machines, manufactures, compositions of matter, devices, methods, and steps described in the specification of the present application are merely specific embodiments. As will be readily understood by those of ordinary skill in the art from the present disclosure, processes, machines, manufactures, compositions of matter, means, methods, or steps that perform substantially the same function, currently existing or to be developed later, will achieve substantially the same results as the corresponding embodiments described herein in accordance with the present disclosure. Therefore, the appended claims are intended to include within their scope such processes, machines, manufactures, compositions of matter, devices, methods, or steps.

## Claims

1. A control method for a bridge resonant converter, the bridge resonant converter comprising a first bridge unit, a transformer, a second bridge unit, and a resonant unit, wherein one terminal of the first bridge unit is connected to a first winding of the transformer, and the other terminal thereof is configured to receive or output a first voltage; one terminal of the second bridge unit is connected to a second winding of the transformer, and the other terminal thereof is configured to correspondingly output or receive a second voltage; the resonant unit is connected between the first bridge unit and the first winding or between the second bridge unit and the second winding; and the control method comprises:
S1: receiving an input voltage and an output voltage of the bridge resonant converter, and calculating a gain of the bridge resonant converter based on the input voltage and the output voltage; and
S2: determining whether the gain is greater than or equal to 1, and setting lengths of a first time Ta and a second time Tb differently when the gain is greater than or equal to 1 and when the gain is less than 1, wherein within the first time Ta, a voltage difference between both terminals of a transformer winding on a side where an output terminal of the bridge resonant converter is located is zero, and the second time Tb is a turn-off delay time of a switching transistor in a bridge unit on the side where the output terminal is located relative to a switching transistor that operates synchronously therewith in a bridge unit on a side where an input terminal is located.

2. The control method for a bridge resonant converter according to claim 1, **characterized in that** in step S2, setting lengths of a first time Ta and a second time Tb differently when the gain is greater than or equal to 1 and when the gain is less than 1 comprises:
S21: determining whether the gain is greater than or equal to 1, if the gain is greater than or equal to 1, proceeding to step S22, and if the gain is not greater than or equal to 1, proceeding to step S23;
S22: configuring time parameters A and B according to a first relational expression;
S23: configuring the time parameters A and B according to a second relational expression; and
S24: obtaining the first time Ta and the second time Tb according to the time parameters A and B.

3. The control method for a bridge resonant converter according to claim 2, **characterized in that** in the first relational expression, the time parameter A is related to the gain and the time parameter B, and the time parameter B is a constant; and in the second relational expression, the time parameter A is a constant, and the time parameter B is related to the gain.

4. The control method for a bridge resonant converter according to claim 2 or 3, **characterized in that** step S24 comprises: receiving an on-time Ts of the switching transistor in the bridge unit on a side where an input terminal is located within a half switching period and the time parameters A and B, and respectively obtaining the first time Ta and the second time Tb according to the relational expressions Ta = A*Ts and Tb = B*Ts.

5. The control method for a bridge resonant converter according to claim 4, **characterized by** further comprising:
S31: receiving an output sampling signal from the bridge resonant converter and a reference signal corresponding to the output sampling signal, and calculating an error signal between the output sampling signal and the reference signal; and
S32: obtaining the on-time Ts based on the error signal.

6. The control method for a bridge resonant converter according to claim 1 or 5, **characterized by** further comprising step S4: outputting a switching drive signal for controlling the switching transistor in the bridge resonant converter, wherein at the first time Ta, the switching transistor in the bridge unit on the side where the output terminal of the bridge resonant converter is located operates such that the voltage difference between the both terminals of the transformer winding on the side where the output terminal is located is zero.

7. The control method for a bridge resonant converter according to claim 1, **characterized in that** each half switching period of the bridge resonant converter comprises the first time.

8. A bridge resonant converter using the control method for a bridge resonant converter according to claim 1, **characterized by** comprising:
the first voltage that is the input voltage;
the second voltage that is the output voltage;
the first bridge unit configured as a half-bridge topology, wherein both terminals of the first winding are respectively connected to common nodes of two legs in the half-bridge topology;
the second bridge unit configured as a full-bridge topology, wherein both terminals of the second winding are respectively connected to common nodes of two switching legs in the full-bridge topology; and
a controller, configured to perform the control method according to claim 1.

9. The bridge resonant converter according to claim 8, **characterized in that** within the first time Ta, a switching control signal output by the controller controls two lower transistors or two upper transistors of the full-bridge topology to be turned on simultaneously.

10. A bidirectional bridge resonant converter using the control method for a bridge resonant converter according to claim 1, **characterized by** comprising:
the first bridge unit configured as a full-bridge topology, wherein both terminals of the first winding are respectively connected to common nodes of two switching legs in the first bridge unit;
the second bridge unit configured as a full-bridge topology, wherein both terminals of the second winding are respectively connected to common nodes of two switching legs in the second bridge unit, and the bidirectional bridge resonant converter is configured to convert the first voltage into the second voltage or convert the second voltage into the first voltage; and
a controller, configured to perform the control method according to claim 1.

11. The bidirectional bridge resonant converter according to claim 10, **characterized in that** when the bidirectional bridge resonant converter is configured to convert the first voltage into the second voltage, within the first time Ta, a switching control signal output by the controller controls two lower transistors or two upper transistors of the second bridge unit to be turned on simultaneously; and
when the bidirectional bridge resonant converter is configured to convert the second voltage into the first voltage, within the first time Ta, the switching control signal output by the controller controls two lower transistors or two upper transistors of the first bridge unit to be turned on simultaneously.

12. A bridge resonant converter using the control method for a bridge resonant converter according to claim 1, **characterized by** comprising:
the first voltage that is the input voltage;
the second voltage that is the output voltage;
the first bridge unit configured as a half-bridge topology, wherein both terminals of the first winding are respectively connected to common nodes of two legs in the half-bridge topology;
the second bridge unit configured as a three-level half-bridge topology, wherein the three-level half-bridge topology comprises:
a switching leg comprising a first switching transistor, a second switching transistor, a third switching transistor, and a fourth switching transistor connected in series;
a capacitor leg comprising a third capacitor and a fourth capacitor connected in series, wherein the capacitor leg is connected in parallel with the switching leg; and
a flying capacitor, connected between a common node of the first switching transistor and the second switching transistor and a common node of the third switching transistor and the fourth switching transistor, wherein
both terminals of the second winding are respectively connected to a common node of the second switching transistor and the third switching transistor and a common node of the capacitor leg; and
a controller, configured to perform the control method according to claim 1.

13. The bridge resonant converter according to claim 12, **characterized in that** within the first time Ta, a switching control signal output by the controller controls the second switching transistor and the fourth switching transistor to be turned on simultaneously or the first switching transistor and the third switching transistor to be turned on simultaneously.

14. A bidirectional bridge resonant converter using the control method for a bridge resonant converter according to claim 1, **characterized by** comprising:
the first bridge unit configured as a full-bridge topology, wherein both terminals of the first winding are respectively connected to common nodes of two switching legs in the full-bridge topology;
the second bridge unit configured as a three-level half-bridge topology, wherein the three-level half-bridge topology comprises:
a switching leg comprising a first switching transistor, a second switching transistor, a third switching transistor, and a fourth switching transistor connected in series;
a capacitor leg comprising a first capacitor and a second capacitor connected in series, wherein the capacitor leg is connected in parallel with the switching leg; and
a flying capacitor, connected between a common node of the first switching transistor and the second switching transistor and a common node of the third switching transistor and the fourth switching transistor, wherein
both terminals of the second winding are respectively connected to a common node of the second switching transistor and the third switching transistor and a common node of the capacitor leg; and
a controller, configured to perform the control method according to claim 1.

15. The bidirectional bridge resonant converter according to claim 14, **characterized in that** when the bidirectional bridge resonant converter is configured to convert the first voltage into the second voltage, within the first time Ta, a switching control signal output by the controller controls the second switching transistor and the fourth switching transistor to be turned on simultaneously or the first switching transistor and the third switching transistor to be turned on simultaneously; and
when the bidirectional bridge resonant converter is configured to convert the second voltage into the first voltage, within the first time Ta, the switching control signal output by the controller controls two lower transistors or two upper transistors of the first bridge unit to be turned on simultaneously.
